(19) Europäisches Patentamt
European Patent Office
Office européen des brevets

(11) **EP 2 480 433 B1**

(12) **EUROPÄISCHE PATENTSCHRIFT**

(45) Veröffentlichungstag und Bekanntmachung des Hinweises auf die Patenterteilung:
**12.06.2013 Patentblatt 2013/24**

(51) Int Cl.:
***B60R 21/0136*** *(2006.01)* ***G01M 17/007*** *(2006.01)*

(21) Anmeldenummer: **10740502.9**

(22) Anmeldetag: **18.06.2010**

(86) Internationale Anmeldenummer:
**PCT/DE2010/000686**

(87) Internationale Veröffentlichungsnummer:
**WO 2011/035750 (31.03.2011 Gazette 2011/13)**

(54) **VORRICHTUNG ZUR ERZEUGUNG EINER KÖRPERSCHALLSCHWINGUNG IM FALLE EINES ZUSAMMENSTOSSES EINES KOLLISIONSOBJEKTS MIT EINEM FAHRZEUG**

DEVICE FOR GENERATING STRUCTURE-BORNE VIBRATION IN CASE OF A COLLISION BETWEEN AN OBJECT AND A VEHICLE.

DISPOSITIF POUR GÉNERER DE BRUIT SOLIDIEN EN CAS DE COLLISION ENTRE UN OBJECT ET UN VÉHICULE.

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.09.2009 DE 102009042781**
**06.05.2010 DE 102010019800**

(43) Veröffentlichungstag der Anmeldung:
**01.08.2012 Patentblatt 2012/31**

(73) Patentinhaber:
• **Continental Automotive GmbH**
**30165 Hannover (DE)**
• **Benteler Automobiltechnik GmbH**
**33104 Paderborn (DE)**
• **Hochschule für angewandte Wissenschaften FH Ingolstadt**
**85049 Ingolstadt (DE)**

(72) Erfinder:
• **FESER, Michael**
**93092 Barbing (DE)**
• **GEIGENFEIND, Mario**
**93133 Burglengenfeld (DE)**
• **NIESSE, Max**
**33178 Borchen (DE)**
• **ANDRES, Thorsten**
**33106 Paderborn (DE)**
• **GROENING, Torsten**
**33098 Paderborn (DE)**
• **KOHLHUBER, Markus**
**85301 Schweitenkirchen (DE)**
• **MATLOK, Daniel**
**95326 Kulmbach (DE)**
• **KOESTNER, Johannes**
**85057 Ingolstadt (DE)**
• **BRANDMEIER, Thomas**
**93173 Wenzenbach (DE)**
• **SPANNAUS, Paul**
**85049 Ingolstadt (DE)**

(74) Vertreter: **Büchner, Jörg**
**Conti Temic microelectronic GmbH**
**Patente & Lizenzen**
**Sieboldstraße 19**
**90411 Nürnberg (DE)**

(56) Entgegenhaltungen:
**DE-A1- 10 058 986    DE-A1-102004 022 831**
**DE-A1-102005 034 589    DE-A1-102007 043 245**
**DE-A1-102008 020 186**

**Beschreibung**

Die Erfindung betrifft eine Vorrichtung zur Erzeugung einer Körperschallschwingung im Falle eines Zusammenstosses eines Kollisionsobjekts mit einem Fahrzeug gemäß dem Oberbegriff von Anspruch 1.

Bei der Erkennung von Unfallsituationen von Personenkraftwagen stellt die Körperschallmessung eine neue Technologie dar. Das Airbagsteuergerät wertet die in einem Crash entstehenden Struktur- bzw. Körperschallschwingungen aus und ermöglicht eine schnelle, zielgerichtete Auslösung der Rückhaltemittel wie dem gesamten Airbagsystem.

Die Entstehung der auswertbaren Körperschallschwingungen hängt stark von der Konstruktion des Fahrzeugvorderwagens ab. Jedes neue, mit der Körperschall-Technologie äuszustattende Fahrzeug muss in Hinblick auf Körperschallentstehung sowie -übertragung untersucht werden. Dies liegt hauptsächlich an der fehlenden Standardisierung der Stoßfängersysteme. Jeder Fahrzeughersteller entwickelt für jedes neue Fahrzeug separate Typschaden- und Stoßfängerelemente. Deren Konstruktion die

Krafteinleitung und damit die Körperschallanregung des Fahrzeugs im Crashfall stark beeinflusst.

Aus der DE 10 2004 022831 A ist eine Vorrichtung zur Messung einer Körperschallschwingung in einem Fahrzeug im Falle eines Zusammenstosses eines Kollisionsobjekts mit einem Fahrzeug, wobei

a) ein mechanisch schwingfähiges Element angeordnet ist,
b) wobei durch den Zusammenstoss eine mechanische Anregung des schwingfähigen Elements bewirkt wird, bekannt.

Aus der DE 102 45 780 A1 ist eine Vorrichtung zur Aufprallerkennung mittels Körperschall zu entnehmen, bei der ein nicht näher bestimmter Detektor im Falle eines Aufpralls Körperschallschwingungen im Fahrzeug erzeugt und an einen Schwingungssensor leitet.

Darüber hinaus ist aus der veröffentlichten WO2009/130097 eine Vorrichtung zur Detektion der Charakteristik eines Aufpralls zu entnehmen, bei der durch die Deformation eines Karosseriebauteils oder eine Mehrzahl an Körperschall erzeugenden Elemente ebenfalls eine für den Aufprall signifikante Körperschallschwingung erzeugt wird.

Nachteilig an diesen Anordnungen ist jedoch, dass die bei der Körperschallerzeugung deformierten Elemente dabei zerstört und folglich die Vorrichtung ersetzt beziehungsweise ausgetauscht werden muss.

Aufgabe der nun vorliegenden Erfindung ist es, eine geeignete Weiterbildung für eine möglichst wiederholbar einsetzbare Vorrichtung vorzustellen. Diese Aufgabe wird durch die Merkmale der unabhängigen Ansprüche gelöst. Vorteilhafte Weiterbildungen sind unter Ansprüchen zu entnehmen.

So weist die Vorrichtung zumindest ein mechanisch schwingfähiges Element auf. Im Gegensatz zu den bisher bei einem Aufprall zerstörten Einzelelemente weist dieses mechanisch schwingfähige Element den besonderen Vorteil auf, dass es auf die Anregungen durch die mechanischen Anregungselemente bzw. das kontinuierliche Anregungsprofil nachgiebig, das heißt also reversibel und elastisch reagiert und daher für eine Mehrzahl von Aufprallereignissen verwendbar ist. Das schwingfähige Element ist daher in etwa mit der Nadel eines Schallplattenspielers vergleichbar, welche durch die Erhebungen der Schallplatte zu Schwingungen angeregt wird.

Wie die Erhebungen der Schallplatte so bildet im vorliegenden Fall eine Mehrzahl von mechanischen Anregungselementen die Einzelimpulse, die zu der gewünschten Körperschallschwingung führen bzw. bildet das Anregungsprofil eine kontinuierliche mechanische Anregung.

Dazu sind das schwingfähige Element und die mechanischen Anregungselemente bzw. das Anregungsprofil so zueinander angeordnet, dass durch den Zusammenstoß die Anregungselemente bzw. das Anregungsprofil und das schwingungsfähige Element in Aufprallrichtung relativ zueinander mechanisch verschoben werden und die Anregungselemente bzw. das Anregungsprofil eine mechanische Schwingungsanregung des schwingfähigen Elements bewirken. Die Relativbewegung zwischen schwingungsfähigem Element und dem Anregungsprofil bzw. der Mehrzahl von Anregungselementen entspricht dabei in Analogie zum Schallplattenspieler der Drehung der Schallplatte. Für die Erfindung ist es dabei unerheblich, ob das schwingungsfähige Element oder aber das Anregungsprofil bzw. die Mehrzahl von Anregungselementen mit dem Prallfänger des Fahrzeugs verbunden und relativ zum anderen Teil bewegt und verschoben wird.

Die Anregungselemente bzw. das Anregungsprofil bewirken jeweils eine mechanische Schwingungsanregung des schwingfähigen Elements, indem die Anregungselementen und das schwingungsfähige Element bei dieser Relativbewegung ineinandergreifen und jedes Anregungselement einen Impuls auf das schwingungsfähige Element ausübt oder aber das Anregungsprofil vorzugsweise kontinuierlich.

Die Geometrie, also beispielsweise die Höhe des schwingungsfähigen Elements sowie der Anregungselemente bzw. des Anregungsprofils ist dabei so bemessen, dass ein hinreichendes Untermaß gegenüber dem Abstand zwischen schwingungsfähigem Element und den Anregungselementen bzw. Anregungsprofil besteht.

Die Mehrzahl von Anregungselementen bzw. das Anregungsprofil oder das mechanisch schwingfähige Element sind mechanisch starr mit einem Prallfänger am Fahrzeug derart gekoppelt, dass bei einem Zusammenstoß eines Kollisionsobjekts auf den Prallfänger über diese starre Kopplung die Anregungselemente bzw. das Anregungsprofil einerseits oder das schwingfähige Element andererseits in die vorgegebene Wirkrichtung, vorzugsweise die Aufprallrichtung verschoben werden.

Grundsätzlich ist es denkbar, dass die Fahrzeugrahmenstruktur eine definierte Bewegungsrichtung des Prallfängers oder der Anregungselemente bzw. des Anregungsprofils oder schwingungsfähigen Elements vorgibt, welches auch von der Aufprallrichtung in gewissen Grenzen abweichen kann, also beispielsweise auch bei einem schrägen Aufprall eine zwangsgeführte Bewegung entgegen der Fahrtrichtung (-X) erzeugt. In einer bevorzugten Ausgestaltung sind die Anregungselemente bzw. das Anregungsprofil oder das schwingungsfähige Element als Ausformung der Außenhaut eines Typ-Schadenelements eines Kraftfahrzeugs ausgebildet. Gerade solche Typ-Schadenselemente haben teilweise eine definiert vorgegebene Verformungsrichtung, welche eben auch in gewissem Maße, als einem spitzen Winkel von der eigentlichen Aufprallrichtung abweichen kann.

Das schwingungsfähige Element weist dabei vorzugsweise eine Eigenresonanzfrequenz auf, welche oberhalb der bei einem Aufprall zu erwartenden Frequenz der durch die Abfolge der Anregungselemente bewirkenden Körperschallschwingungen ist. Die durch die Auslenkung des schwingungsfähigen Elements bewirkte Schwingung ist daher ein hochfrequenter Impuls und entsteht erst durch die Abfolge der Anregungen durch die Mehrzahl von Anregungselementen die für den Aufprall signifikante Körperschallschwingung.

Vorzugsweise ist die Vorrichtung mit dem Prallfänger verbunden und führt die Bewegung des Prallfängers während der Deformation des Fussgängerschutzelements zu einer Aktivierung der Körperschallschwingungen. So kann bereits die Deformation des Fußgängerschutz-Elements für die Erzeugung der Körperschallschwingung genutzt werden. Dies hat zum einen den Vorteil, dass der Aufprall sehr frühzeitig erkannt werden kann, andererseits aber auch die besonders gleichmäßige Deformation des Fußgängerschutzelementes im Vergleich zu den doch eher sich stoßweise deformierenden Schadenselementen des Fahrzeugs ausgelöst werden kann.

In einer bevorzugten Ausgestaltung erfährt das schwingfähige Element eine durch die Geometrie des Anregungsprofils, beispielsweise eines Wellenprofils zwangsweise geführte kontinuierliche Auslenkung. Vorteil einer solchen kontinuierlichen Anregung ist, dass eine impulsartige Anregung und damit verbundene hochfrequentere Störungen vermieden und somit ein schmalbandiges Frequenzspektrums der Körperschallsignale in Abhängigkeit der Relativgeschwindigkeit erreicht wird.

Das Wellenprofil bewirkt vorzugsweise gegenüber der Bewegungsrichtung von schwingfähigem Element zu Wellenprofil senkrechte Auslenkungen des schwingungsfähigen Elements vergleichbar dem Prinzip der Seitenschrift bei einer Schallplatte. Besonders bevorzugt wird dabei das schwingungsfähige Element in einem beidseitig entlang der Bewegungsrichtung verlaufenden Wellenprofil geführt, das heißt es entsteht eine Rille mit konstanter Breite, welche jedoch quer zur Bewegungsrichtung ein Wellenprofil aufweist.

Die Erfindung betrifft darüber hinaus ein Kraftfahrzeug mit zumindest einer solchen Vorrichtungen und einer Sensor- und Auswerteeinrichtung, die erzeugten Signale aufnimmt und daraus die Aufprallgeschwindigkeit ermittelt.

Vorzugsweise weist ein Kraftfahrzeug aber zumindest zwei solche Vorrichtungen, also eine erste Körperschall-anregende Einheit zur mechanischen Erzeugung eines ersten deterministischen Körperschallsignals und eine davon unterschiedliche zweite Körperschall-anregende Einheit zur Erzeugung eines zweiten deterministischen Körper-schallsignals auf. Die Körperschallschwingungen ($X_1(t),X_2(t),F1L,F2L,F1R,F2R$) sind dabei jeweils von der Aufprall-bzw. Deformationsgeschwindigkeit abhängig und zudem voneinander unterscheidbar. Die Vorrichtungen weisen also voneinander abweichende Schwingungscharakteristiken, insbesondere unterschiedliche Abstände der Anregungselemente oder Unterschiede hinsichtlich der Geometrie des Anregungsprofils - untereinander auf. Diese zwei unterscheidbaren Körperschallschwingungen überlagern sich in der Fahrzeugkarosserie und kann das so entstehende Summensignal signaltechnisch besonders leicht verarbeitet, insbesondere die in beiden gleichermaßen enthaltene Abhängigkeit von der Aufprall- bzw. Deformationsgeschwindigkeit ausgenutzt und die Aufprall- bzw. Deformationsgeschwindigkeit aus einem niederfrequenten Anteil der Summensignals abgeleitet werden, ohne dass jedes einzelne dieser Körperschallsignale zunächst einzeln erfasst werden müsste.

Vorzugsweise sind in ein Kraftfahrzeug jedoch darüber hinaus in einem ersten Bereich des Fahrzeugs, also beispielsweise der linken Fahrzeughälfte, eine erste Körperschallerzeugungsvorrichtung mit zwei Körperschall-anregenden Einheiten (1.1L+5.1L,1.2L+5.2L) zur mechanischen Erzeugung zweier unterscheidbarer deterministischer Körperschallschwingungen und in einem räumlich davon beabstandeten zweiten Bereich, also beispielsweise der rechten Fahrzeughälfte, eine zweite Körperschallerzeugungsvorrichtung mit nochmals zwei Körperschall-anregenden Einheiten (1.1R+5.1R,1.2R+5.2R) zur Erzeugung zweier weiterer, voneinander als auch von denen der ersten Körperschallerzeugungsvorrichtung unterscheidbarer deterministischer Körperschallschwingungen vorgesehen. Dadurch kann vorzugsweise neben der Aufprallgeschwindigkeit auch die Art, Richtung beziehungsweise der Ort des Aufpralls noch näher bestimmt werden.

Die Erfindung wird nachfolgend anhand von Ausführungsbeispielen unter Bezugnahme auf die Figuren näher erläutert.

Es zeigen:

Fig. 1    Prinzipskizze einer erfindungsgemäßen Vorrichtung mit zwei schwingungsfähigen Elementen mit Anregungselementen mit unterscheidbar unterschiedlicher Anregungsfrequenz

Fig.2    Skizzen verschiedene Ausgestaltungsmöglichkeiten der Integration der Vorrichtung in beziehungsweise an Schadenselemente eines Fahrzeugs

Fig. 3    Prinzipskizze einer erfindungsgemäßen Vorrichtung mit zwei schwingungsfähigen Elementen mit jeweils einem kontinuierlichen Anregungsprofil mit unterscheidbar unterschiedlicher Anregungsfrequenz

Fig. 4    Skizzen einer beidseitig zwangsgeführten Nadel in einem Wellenprofil mit Seitenschrift

Fig. 5    Skizzen des Frequenzverlaufs und der Anregungsprofile für ein gegenläufiges rampenförmiges Frequenzverhalten (Doppel-Sweep)

Fig. 6    Skizzen des Zeitsignals und der Spektralverteilung bei einer Anregung mit unterschiedlichen Aufprallgeschwindigkeiten auf eine sinusförmige Wellenstruktur

Fig. 7    Kraftfahrzeug mit jeweils zwei unterscheidbaren Körperschall-erzeugenden Einheiten je Fahrzeugseite

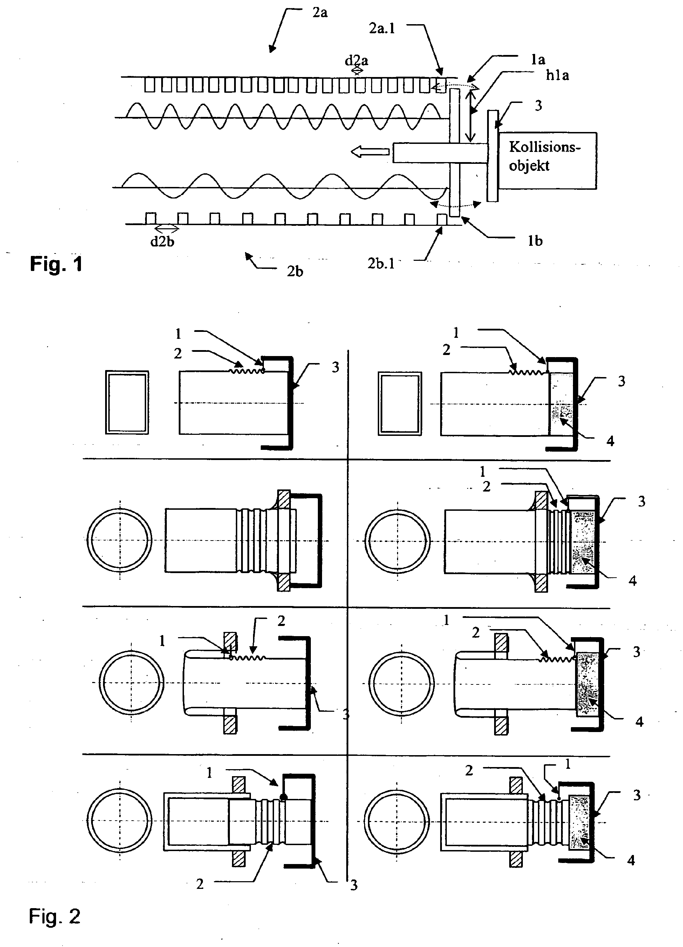

Die Figur 1 zeigt ein schwingungsfähiges Element 1a, welches mit dem Prallfänger 3 mechanisch starr gekoppelt ist und so bei Aufprall eines Kollisionsobjektes auf den Prallfänger 3 mechanisch über die Anregüngszlemente 2A hinweg verschoben wird. Dabei führt jedes der Anregungselementen 2A zu einer Auslenkung des schwingungsfähigen Elements 1a und damit zu einem Einzelimpuls, welches sich mit den anderen Impulsen durch die anderen Anregungselemente überlagert und so zu der skizzierten Körperschallschwingung führt. Selbstverständlich führt diese mechanische Anregung zu mehreren Schwingungen verteilt über das Spektrum, jedoch wird durch den Abstand d2a ein bestimmter Sinusschwingungsanteil definiert, der für die Geschwindigkeit des Aufpralls bzw. Deformation signifikant ist und vom Sensor erfasst und ausgewertet wird.
Wie in der Skizze in Figur 1 gezeigt, ist die Höhe des schwingungsfähigen Elements dabei größer als der Abstand zu den Anregungselementen, so dass bei der Verschiebung in Aufprallrichtung jedes Anregungselement jeweils zu einer Biegung des schwingungsfähigen Elements führt, wie dies ebenfalls skizzenhaft angedeutet ist. Für die Erfindung ist dabei unerheblich, ob nun das schwingungsfähige Element oder aber die Anregungselemente mit dem Prallfänger starr verbunden sind.
Figur 1 zeigt darüber hinaus, ein weiteres schwingungsfähiges Element 1 b, welches während des Aufpralls von anderen Anregungselementen 2b angeregt wird, wobei der Abstand dieser Anregungselemente 2b von den Anregungselementen 1 b abweicht, so dass die ins schwingungsfähige Element 1 b eingeprägte Körperschallschwingung auch deutlich von der in das Element 1 A eingeprägten unterscheidbar ist.
Werden mehrere, das heißt zumindest 2 schwingungsfähige Elemente bei einem Aufprall gemeinsam durch unterschiedliche Anregungselemente mit unterschiedlicher Frequenz angeregt, bietet sich die besondere Möglichkeit, die dabei entstehenden unterscheidbaren Körperschallschwingungen relativ zueinander zu bewerten und so in besonders einfacher Weise Rückschlüsse auf die Schwere und Geschwindigkeit des Aufpralls bzw. Deformation zu gewinnen.
Nachfolgend sollen noch einige Ausführungsbeispiele eines besonders einfachen und kostengünstigen Aufbaus dieser Vorrichtung näher erläutert werden. Dazu sind in Figur 2 mehrere Beispiele von typischen Schadenselementen in Fahrzeugen gezeigt. Schadenselemente sind dabei typischerweise für bestimmte Unfallsituationen vorgesehene zu deformierende Elemente, welche sich im Fahrzeug kostengünstig austauschen lassen.
In der rechten Spalte sind dabei jeweils Ausgestaltungen gezeigt, die ein zusätzliches deformierbares Dämpfungselement 4 enthalten. Dieses Dämpfungselement kann vorzugsweise reversibel, beispielsweise als mit einem Elastomer ausgebildet sein und als Fußgängerschutzelement wirken. Das schwingungsfähige Element 1 ist dabei mechanisch mit dem Prallfänger 3 so gekoppelt, dass bereits bei der Verformung des Dämpfungselements 4 das schwingungsfähige Element 1 mit den Anregungselementen 2 in Verbindung tritt und die auszuwertende Körperschallschwingung erzeugt. Die Anregungselemente oder das Anregungsprofil oder aber das schwingungsfähige Element können dabei vorzugsweise in die Außenhaut des Schadenelementes integriert sein, also beispielsweise durch Einbuchtungen oder Ausformungen dieser Außenhaut gebildet werden. Dabei können bereits typischerweise im Schadenelement vorgesehene Ausformungen benutzt werden, die das schwingungsfähige Element 1 berühren und reversibel verformen.
Eine herkömmliche Körperschall-anregende Einheit besteht beispielsweise aus einer Mehrzahl von Körperschall-erzeugenden Einzelelementen, welche nacheinander aktiviert, beispielsweise eine Folge von Einzelbolzen abgeschert wird, und durch Überlagerung der dabei jeweils entstehenden Schallimpulse aus der Folge von Schallimpulsen das von der Geschwindigkeit der Deformation abhängige Körperschallsignal entsteht.
Erfindungsgemäß kann im Gegensatz dazu ein mechanisch schwingfähiges, also reversibles Element sowie eine Mehrzahl von mechanischen Anregungselementen vorgesehen sein, welche so zueinander angeordnet sind, dass durch einen Aufprall die Anregungselemente oder das schwingungsfähige Element in Aufprallrichtung relativ zueinander mechanisch verschoben werden und die Anregungselemente jeweils eine mechanische Anregung des schwingfähigen Elements bewirken und aus der Folge von Anregungen des schwingfähigen Elements das von der Geschwindigkeit der Deformation abhängige Körperschallsignal entsteht.

In diesen beiden vorgenannten Fällen entsteht das für die Aufprallgeschwindigkeit charakteristische und deterministische Körperschallsignal jeweils durch Überlagerung einer Vielzahl von in ihrem zeitlichen Abstand bestimmten Einzelimpulsen. Während jedoch Einzelimpulse auch bei ihrer Überlagerung neben der gewünschten Signal Frequenz auch einen deutlichen Anteil an hochfrequenten Störungen mit erzeugen, kann alternativ dazu vergleichbar dem Wirkprinzip einer Schallplatte mit einem mechanisch schwingfähigen Element sowie einer kontinuierlichen, amplituden- und/oder frequenz- und/oder phasenveränderlichen mechanischen Anregungsprofil, beispielsweise einem Wellenprofil vorteilhaft eine sehr wenig störbelastete Schwingung erzeugt werden. Schwingfähiges Element und das kontinuierliche mechanische Anregungsprofil sind so zueinander angeordnet, dass beim Aufprall des Fahrzeugs das Anregungsprofil oder das schwingungsfähige Element in Aufprallrichtung relativ zueinander mechanisch verschoben werden und das Anregungsprofil eine kontinuierliche mechanische Anregung des schwingfähigen Elements bewirkt und aus dieser Anregung des schwingfähigen Elements das von der Geschwindigkeit der Deformation abhängige Körperschallsignal entsteht. Während also bei einer Schallplatte durch Drehung der Schallplatte die stehende Nadel in einer in ihrer Tiefe oder Form der Seitenwand strukturierten Rille geführt wird, wird durch den Aufprall die Relativbewegung erzeugt, durch die das schwingungsfähige Element bzw. das Anregungsprofil lateral zueinander verschoben werden.

Im Gegensatz zu den beiden erstgenannten Beispielen kann so eine kontinuierliche Anregung und dementsprechend relativ oberwellen- und störanteilsfreie Schwingung in die Nadel eingeprägt werden.

Gemeinsam ist diesen hier beschriebenen Ausführungsbeispielen aber, dass durch die eine solche Körperschall-anregende Einheit immer ein deterministisches Körperschallsignal erzeugt wird und durch die unterschiedliche Ausgestaltung zweier solcher Körperschall-anregender Einheiten auch ganz gezielt 2 unterschiedliche deterministische Körperschallsignale erzeugt werden können. Für die erfindungsgemäße Lehre reicht grundsätzlich eine einzige Einheit aus, wenngleich die Verwendung zweier unterschiedlicher Einheiten besondere Vorteile für die Signalverarbeitung bietet. Das Funktionsprinzip ist jedoch bei beiden identisch - nur die Schwingungscharakteristik wird durch die jeweils unterschiedlich gewählte Geometrie gezielt unterschiedlich eingestellt. Diese Körperschallschwingungen werden vom Sensor erfasst und daraus die Aufprall bzw. Deformationsgeschwindigkeit ermittelt. Durch die bevorzugte Erzeugung zweier bekannter und unterscheidbarer Körperschallschwingungen, die wiederum beide von der Aufprallgeschwindigkeit abhängig sind, kann eine Ermittlung der Aufprall- bzw. Deformationsgeschwindigkeit aus der Relation der ja an sich bekannten Körperschallschwingungen relativ zueinander gewonnen werden, ohne dass die Aufprallgeschwindigkeit unmittelbar errechnet werden muss. Da sich die Körperschallschwingungen im Fahrzeug überlagern, kann die Auswertung insbesondere auf die Überlagerung dieser beiden Schwingungen, insbesondere auf niederfrequente Anteile in diesem gemischten Signal ausgerichtet werden.

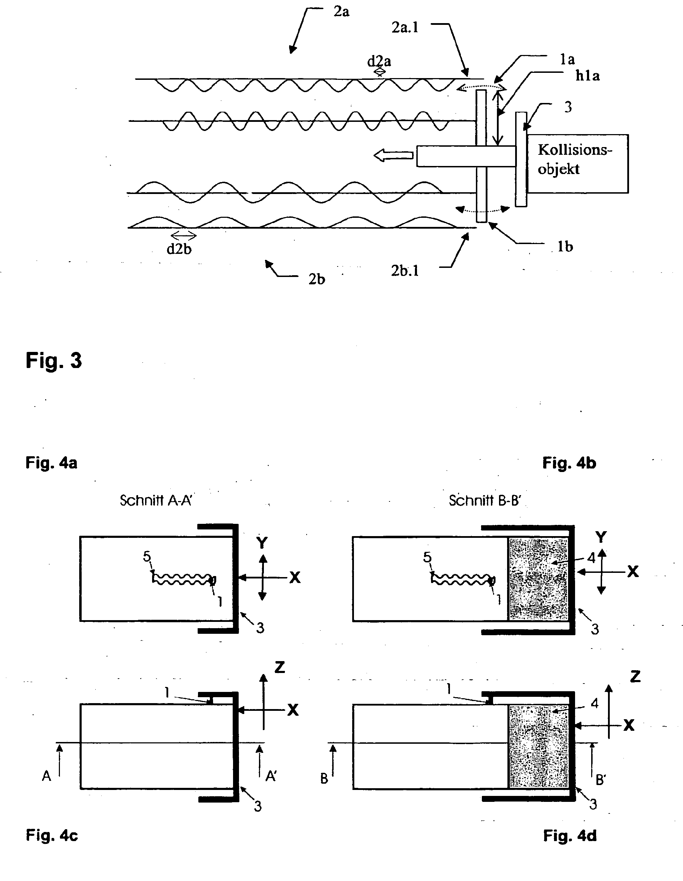

Wie bereits ausgeführt, kann vergleichbar dem Wirkprinzip einer Schallplatte mit einem mechanisch schwingfähigen Element sowie einer kontinuierlichen mechanischen Anregungsprofil vorteilhaft eine sehr wenig störbelastete Schwingung erzeugt werden, die in Figur 3 skizzenhaft verdeutlicht werden soll. Schwingfähiges Element und das kontinuierliche, mechanische Anregungsprofil, also das Wellenprofil 5, sind so zueinander angeordnet, dass beim Aufprall des Fahrzeugs das Anregungsprofil oder das schwingungsfähige Element 1 in Aufprallrichtung relativ zueinander mechanisch verschoben werden und das Anregungsprofil eine kontinuierliche mechanische Anregung des schwingfähigen Elements bewirkt und aus dieser Anregung des schwingfähigen Elements das von der Geschwindigkeit der Deformation abhängige Körperschallsignal entsteht. Die durch das schwingungsfähige Element 1a bzw. 1b abgefahrene Wellenstruktur 5a.1, 5b.1 weist wiederum eine für das jeweilige Element charakteristische Periodendauer (4*d2a bzw. 4*d2b) auf. In Figur 1e ist dies als Prinzip einer Tiefenschrift ausgestaltet, wie dies bei alten Mono-Schallplatten teilweise üblich war.

Demgegenüber skizziert Figur 4 ebenfalls nach dem Wirkprinzip einer Schallplatte aufgebaut ein alternatives mechanisches Konzept, bei denen das schwingfähige Element 1 bei seiner Bewegung in Aufprallrichtung X in einer dazu in Querrichtung Y verlaufenden Wellenstruktur 5 zwangsgeführt in eben diese Querrichtung Y ausgelenkt wird. Dieser Aufbau weist Ähnlichkeit mit der Seitenschrift bei Schallplatten auf. Das schwingfähige Element 1 wird dabei in Z-Richtung sicher in der Wellenstruktur 5 gehalten. Eine solche Ausgestaltung hat den besonderen Vorteil, dass diese einen sehr gleichmäßige und kontinuierliche Anregung im genau die eine vorgegebene Schwingungsrichtung, hier als Y bezeichnet, sicherstellt. Für das erfindungsgemäße Verfahren werden dabei jeweils zumindest 2 schwingfähige Elemente durch jeweils eine von der anderen abweichende Wellenstruktur 5 geführt.

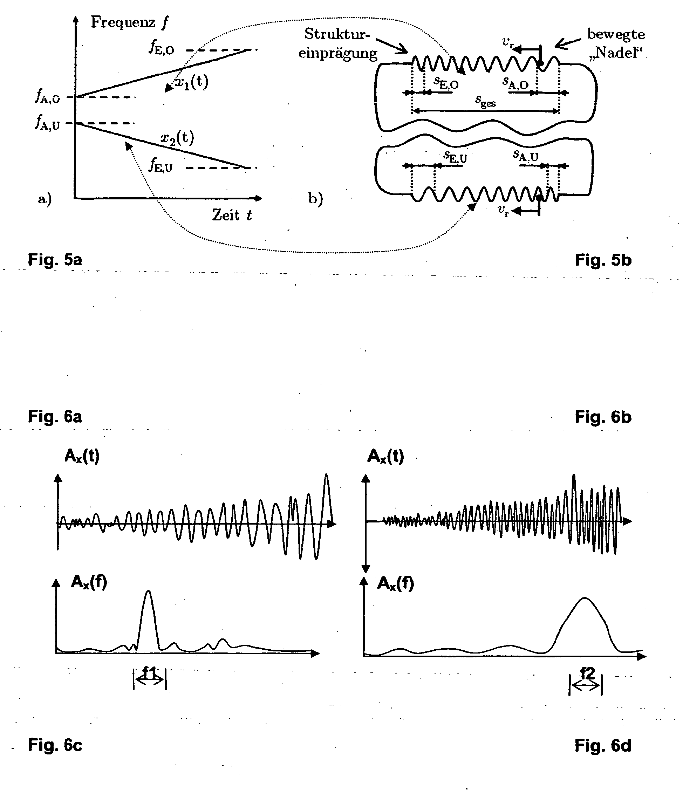

Die Wellenstruktur 5 muss dabei keineswegs nur eine harmonische Sinusschwingung sein, sondern kann beispielsweise auch eine über den Weg veränderliche Periodendauer bzw. Frequenz einprägen, wie dies in Figur 5 näher skizziert wird. Alternativ könnte eine Phasenveränderung einprägen. Nachfolgend soll der besondere Vorteil einer Einprägung zweier bei einem Zusammenstoß gemeinsam erzeugter, jedoch unterscheidbar unterschiedlicher Schwingungen näher erläutert werden.

Für eine Realisierung der Signalverarbeitung sind prinzipiell verschiedene Ansätze denkbar. Ausgehend von bevorzugt zwei parallel erzeugten Schwingungen überlagern sich diese aufgrund der Linearitätseigenschaften des Systems additiv zu einer Resultierenden

$$x(t) = x_O(t) + x_U(t).$$

Eine Nutzung rein harmonischer Signale und der damit verbundenen Konzentration der Information auf eine einzelne Frequenz erscheint weniger geeignet, da der mechanische Übertragungskanal starkes Eigenverhalten mit Resonanz- und Antiresonanzstellen aufweist, die zu Auslöschungen des Signals führen können. Eine verbesserte Form der Anregung besteht daher aus zwei synchronen Sweep-Signalen (vgl. Fig. 5) mit für $v_r$ = const. linear ansteigender bzw. linear abfallender Frequenz

$$x_O(t) = \sin\left(2\pi(f_{A,O}\, t + \frac{\Delta f_O}{\Delta t}\, t^2)\right) \quad \text{mit} \quad \Delta f_O > 0,$$

$$x_U(t) = \sin\left(2\pi(f_{A,U}\, t + \frac{\Delta f_U}{\Delta t}\, t^2)\right) \quad \text{mit} \quad \Delta f_U < 0.$$

Abbildung 5a) stellt die Anregung mit kontinuierlich veränderter Frequenz und gegenläufiger Charakteristik im Frequenz-Zeit-Diagramm dar. Die mechanische Anregung kann beispielsweise durch die Abtastung einer wellenförmigen Oberflächenstruktur erfolgen, wie in Fig. 5b skizzenhaft angedeutet ist.

Mit dem Übergang in die Geschwindigkeitsabhängigkeit erhält man aus den Gleichungen vorgenannten mit $s_{A,O}$ und $s_{A,U}$ der initialen geometrischen Periode des aufsteigenden und absteigenden Sweeps sowie $\Delta s_O/\Delta x = (s_{A,O}-s_{E,O})/\Delta x$ und $\Delta s_U/\Delta x = (s_{A,U} - s_{E,U})/\Delta x$ deren geometrischer Steigungen die beiden folgenden Ausdrücke.

$$x_O(t) = \sin\left(2\,\pi\,(\frac{v_r}{s_{A,O}}\, t + \frac{\Delta x\, v_r^2}{\Delta s_O}\, t^2)\right) \quad \text{mit} \quad \frac{\Delta s_O}{\Delta x} > 0$$

$$x_U(t) = \sin\left(2\,\pi\,(\frac{v_r}{s_{A,U}}\, t + \frac{\Delta x\, v_r^2}{\Delta s_U}\, t^2)\right) \quad \text{mit} \quad \frac{\Delta s_U}{\Delta x} < 0.$$

Die Startfrequenzen entsprechen demnach dem Zusammenhang $f_{A,O} = v_r/s_{A,O}$ und $f_{A,U} = v_r/s_{A,U}$, während die Frequenzsteigungen von den geometrischen Steigungen und dem Geschwindigkeitsquadrat nach $\Delta f_O/\Delta t = \Delta x\, v_r^2/\Delta s_O$, $\Delta f_U/\Delta t = \Delta x\, v_r^2/\Delta s_U$ abhängen.

Die gegenläufigen Funktionen der Schwingfrequenzen $f_O(t)$ und $f_U(t)$ ergeben sich danach zu $f_O(t) = v_r/s_{A,O} + (\Delta x\, v_r^2/\Delta s_O)\, t$ und $f_U(t) = v_r/s_{A,U} + (\Delta x\, v_r^2/\Delta s_U)\, t$.

Anhand der gewählten Parameter kann die Anregung an die Gegebenheiten von Fahrzeug und Messtechnik angepasst werden, beispielsweise kann so der begrenzte Frequenzbereich eines Sensors für die Serienanwendung berücksichtigt werden.

Das messbare Körperschallsignal ist im Allgemeinen für eine direkte Erfassung und Verarbeitung im Controller des Steuergerätes eventuell zu breitbandig. Eine Quadratur des erfassten Signals noch im Sensor, welche einer Demodulation des Informationssignals entspricht, löst vorzugsweise das Problem. Es ergibt sich

$$y^2 = (x1 + x2)^2 = (\sin(2\pi\, f_O(t)\, t) + \sin(2\,\pi\, f_U(t)\, t))^2.$$

Unter Vernachlässigung der quadratischen Terme entsteht dabei ein Summen- sowie ein Differenzsignal. Die breitbandig über die Karosserie übertragenen Informationen gehen in einen hochfrequenten Anteil mit $f_O + f_U$ und einen niederfrequenten Anteil mit $f_O - f_U$ über

$$y^2 \approx \cos\left(2\pi \left(f_O(t) - f_U(t)\right) t\right) - \cos\left(2\pi \left(f_O(t) + f_U(t)\right) t\right)$$

Durch Demodulation mit Hilfe der Quadratur lässt sich die hochfrequente Nutzinformation in den niedrigeren Frequenzbereich bringen. Auf diese Weise können die Vorteile der störunabhängigen Übertragung im hochfrequenten Bereich mit der geringen Bandbreite bzw. Abtastrate des Airbag-Steuergerätes vereint werden.

Durch Tiefpassfilterung wird der hochfrequente Anteil eliminiert. Der niederfrequente Anteil kann problemlos an das Steuergerät übertragen bzw. dort mittels A/D-Wandlung eingelesen und ausgewertet werden. Seine Frequenzfunktion $f_D(t)$ ergibt sich mit $|\Delta s| = |\Delta s_i|$, $i \in \{O,U\}$ zu

$$f_D(t) = f_O(t) - f_U(t) = v_r \left( \frac{1}{s_{A,O}} - \frac{1}{s_{A,U}} \right) + 2\, v_r^2 \frac{\Delta x}{|\Delta s|}\, t.$$

Es stellt sich demnach ein mit der Differenz der beiden Startfrequenzen beginnender Frequenzverlauf dar, welcher mit der doppelten Steigung der beiden Sweeps vor der Demodulation ansteigt. Unter Nutzung der durch die mechanische Realisierung der Anregung festen und bekannten Parameter lässt sich damit auf die Crash-, also Aufprall- bzw. Deformationsgeschwindigkeit zurückschließen.

Daher ist es besonders vorteilhaft, wenn, wie in Fig. 5b gezeigt, zwei Wellenprofile mit gegensätzlicher Frequenzänderung vorgesehen sind, d.h. ein erstes Wellenprofil vorsehen ist, welches eine linear ansteigende Frequenz aufweist und ein zweites Wellenprofil vorgesehen ist, welches eine linear abfallende Frequenz aufweist. Bei einem Zusammenstoß werden beide Wellenprofile zeitgleich von jeweils einem schwingungsfähigen Element erfasst und entsteht als Signalform ein sogenannter Doppel-Sweep, wie in Fig. 5a gezeigt, der entsprechend voranstehender Ausführung ausgewertet werden kann.

Die Figur 6a und 6b skizzieren die Amplitudenverlauf für eine identische sinusförmige Anregung bei 2 unterschiedlichen Geschwindigkeiten. Die Figur 6a und 6c entspricht dabei einem Aufprall mit niedriger Geschwindigkeit, während die Figur 6b und 6d einen Aufprall mit dem gegenüber höherer Geschwindigkeit zeigen.

Die Figuren 6c und 6d skizzieren nun demgegenüber die spektrale Verteilung im erzeugten Körperschallsignal. Deutlich erkennbar ist dabei, dass ein deutlicher Energiedichtemaximumsbereich f1 bzw. f2 auftritt, also eine klar unterscheidbare deterministische Schwingung herausfilterbar ist und deren Lage f1 bzw. f2 von der Geschwindigkeit des Aufpralls bzw. der Deformation abhängt und daraus auch bereits bei nur einer Körperschall-anregenden Einheit grundsätzlich abgeleitet werden kann.

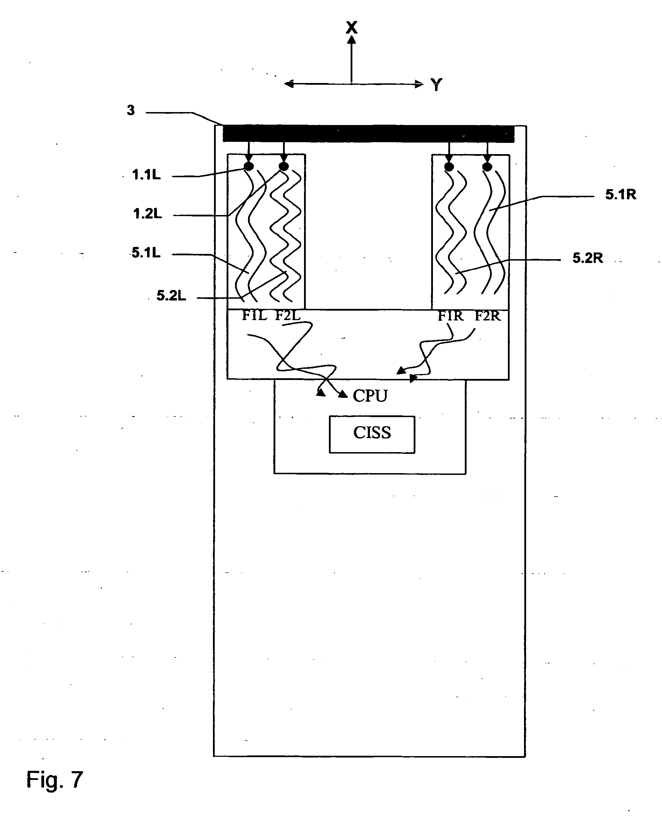

Figur 7 skizziert nun noch ein Kraftfahrzeug mit einer besonders bevorzugten Weiterbildung der erfindungsgemäßen Aufprallerkennungsvorrichtung. Dazu ist in einem ersten Bereich, hier beispielsweise dem linken Bereich L des Fahrzeugs, eine ersten Körperschallerzeugungsvorrichtung mit zwei Körperschall-anregenden Einheiten (1.1L+5.1L,1.2L+5.2L) bestehend zur mechanischen Erzeugung zweier unterscheidbarer deterministischer Körperschallschwingungen vorgesehen. Diese Körperschall-anregenden Einheiten bilden sich vorzugsweise wieder aus einem schwingungsfähige Element 1.1 L, welches analog zu Figur 4 in einer Wellenstruktur 5.1 L kontinuierlich zwangsgeführt in Querrichtung Y senkrecht zur Führungsrichtung X ausgelenkt wird. Die Wellenstruktur 5.1L ist dabei von der Wellenstruktur 5.2L unterscheidbar, hat hier beispielsweise die doppelte Periodendauer. Prallt nun ein Kollisionsobjekt auf den Prallfänger 3 und schiebt somit die schwingungsfähigen Elemente 1.1 L und 1.2L in Aufprallrichtung -X, so kommt es zur Erzeugung zweier Körperschallschwingungen in Abhängigkeit von der Aufprallgeschwindigkeit, wobei die Körperschallschwingungen von 5.2L in etwa die doppelte Frequenz wie die durch 5.1 L erzeugte Körperschallschwingung hat. Beide Körperschallschwingungen überlagern sich in der Fahrzeugstruktur und gelangen zum Körperschallsensor CISS in der zentralen Auswerteeinheit.

In einem räumlich davon beabstandeten zweiten Bereich des Fahrzeugs, hier dem rechten Fahrzeugvorderraum, ist eine zweite Körperschallerzeugungsvorrichtung mit nochmals zwei Körperschall-anregenden Einheiten 1.1R+5.1R,1.2R+5.2R zur Erzeugung zweier weiterer, deterministischer Körperschallschwingungen F1L,F2L vorgesehen. Die Wellenstrukturen 5.1 R und 5.2R sind sowohl voneinander als auch von den Wellenstrukturen 5.1 L und 5.2L der ersten (linken) Körperschallerzeugungsvorrichtung unterscheidbar. Auch diese Körperschallschwingungen F1R und F2R überlagern sich in der Fahrzeugstruktur und gelangen zum Körperschallsensor CISS in der zentralen Auswerteeinheit. Insgesamt entsteht also ein Überlagerungssignal aus 4 unterscheidbaren Körperschallsignalen, von denen jeweils 2 aufgrund ihrer im Wesentlichen identischen Position der Erzeugung identisch durch die Deformations- bzw. Aufprallgeschwindigkeit überlagert sind.

Während jedoch bei einem Frontalaufprall alle 4 Körperschall-anregenden Einheiten nahezu die gleiche Aufprall- bzw. Deformationsgeschwindigkeit wahrnehmen, kommt es im Falle eines Schrägaufpralls oder seitlich versetzten Aufpralls zu einer ungleichmäßigen Belastung am Prallfänger 3 und damit zu einer unterscheidbaren Deformations- bzw. Aufprallgeschwindigkeit zwischen den rechten und linken Körperschallerzeugungsvorrichtungen. Daraus kann vorzugsweise auch der Ort des Aufpralls abgeleitet werden.

In Figur 7 wurde zur einfachen visuellen Erkennbarkeit dabei eine Wellenstruktur 5 skizziert, die selbst verständlich nur skizzenhaft, also insbesondere in den gewählten Periodendauern und der Stärke der Auslenkung in Y-Richtung nicht der technischen Realität entspricht, sondern so weit vergrößert wurde, dass die Unterscheidbarkeit der Wellenstrukturen 5.1 R, 5.2R, 5.1 L und 5.2L auch mit bloßem Auge sichtbar sind. Zudem wurden wieder Schwingungen verwendet, da diese mit den verfügbaren Zeichenprogrammen leichter in unterschiedlicher Periodendauer darstellbar sind. Selbst verständlich eignen sich für eine praktische Ausgestaltung insbesondere die bevorzugten rampenförmig frequenzveränderten Körperschallsignale (Doppel-Sweep), die bereits eingangs erwähnt und sind die Auslenkung Y-Richtung nur einige Mikrometer bzw. Millimeter groß. Da für die Verarbeitbarkeit der Signale aber zudem die Signalübertragungseigenschaften des Fahrzeugs sehr entscheidend sind, erfolgt die Festlegung konkreter Maße für die Y-Auslenkung und Periodendauer vorzugsweise in Versuchen anhand dieser Fahrzeugstruktur.

## Patentansprüche

1. Vorrichtung zur Erzeugung einer Körperschallschwingung im Falle eines Zusammenstosses eines Kollisionsobjekts mit einem Fahrzeug, **dadurch gekennzeichnet, dass**
ein elastisches, mechanisch schwingfähiges Element (1,1a,1b,) sowie eine Mehrzahl von mechanischen Anregungselementen (2,2a,2b) oder ein Anregungsprofil (5) so zueinander angeordnet sind,
dass durch den Zusammenstoß die Anregungselemente (2,2a,2b) oder das Anregungsprofil (5) und das schwingungsfähige Element (1) relativ zueinander mechanisch verschoben werden und
die Anregungselemente (2,2a,2b) oder das Anregungsprofil (5) jeweils eine elastische, reversible, mechanische Anregung des schwingfähigen Elements (1) bewirken.

2. Vorrichtung nach Anspruch 1, **dadurch gekennzeichnet, dass** die Mehrzahl von Anregungselementen (2,2a,2b) oder das Anregungsprofil (5) oder das mechanisch schwingfähige Element (1) mechanisch starr mit einem Prallfänger (3) am Fahrzeug derart gekoppelt sind, dass bei einem Zusammenstoß mit einem Kollisionsobjekt der Prallfänger (3) über diese starre Kopplung einerseits die Anregungselemente (2,2a,2b) bzw. das Anregungsprofil (5) oder andererseits das schwingfähige Element (1) relativ zueinander verschiebt.

3. Vorrichtung nach Anspruch 1 oder 2, **dadurch gekennzeichnet, dass** das schwingungsfähige Element (1) eine Eigenresonanzfrequenz aufweist, welche oberhalb der bei einem Zusammenstoß zu erwartenden Frequenz der durch die Abfolge der Anregungselemente (2,2a,2b) oder der Geometrie des Anregungsprofils (5) bewirkenden Körperschallschwingungen ist.

4. Vorrichtung nach einem der vorangehenden Ansprüche, **dadurch gekennzeichnet, dass** die Anregungselemente (2,2a,2b) oder das schwingfähige Element (1) oder das Anregungsprofil (5) als Ausformung der Außenhaut eines Typ-Schadenelements eines Kraftfahrzeugs ausgebildet sind.

5. Vorrichtung nach einem der vorangehenden Ansprüche, **dadurch gekennzeichnet, dass** die Vorrichtung mit dem Prallfänger (3) verbunden ist und die Bewegung des Prallfängers während der Deformation eines Fussgängerschutzelements (4) zu einer Aktivierung der Körperschallschwingungen führt.

6. Vorrichtung nach einem der vorangehenden Ansprüche, **dadurch gekennzeichnet, dass** das schwingfähige Element (1) eine durch die Geometrie des Anregungsprofils (5) zwangsweise geführte kontinuierliche Auslenkung erfährt.

7. Vorrichtung nach Anspruch 6, **dadurch gekennzeichnet, dass** das Anregungsprofil ein Wellenprofil aufweist.

8. Vorrichtung nach Anspruch 7, **dadurch gekennzeichnet, dass** das Wellenprofil in Bewegungsrichtung (X) von schwingfähigem Element (1) zu Wellenprofil (5) senkrechte Auslenkungen (Y) des schwingungsfähigem Elements (1) bewirkt.

9. Vorrichtung nach Anspruch 8, **dadurch gekennzeichnet, dass** das schwingungsfähige Element (1) in einem beidseitig entlang der Bewegungsrichtung verlaufenden Wellenprofil geführt wird.

10. Vorrichtung nach einem der vorangehenden Ansprüche 7 bis 9, **dadurch gekennzeichnet, dass** ein erstes Wellenprofil vorgesehen ist, welches eine linear ansteigende Frequenz aufweist und ein zweites Wellenprofil vorgesehen ist, welches eine linear abfallende Frequenz aufweist und bei einem Zusammenstoß beide Wellenprofile zeitgleich von jeweils einem schwingungsfähigen Element erfasst werden.

11. Kraftfahrzeug mit einer Vorrichtung nach einem der vorangehenden Ansprüche und einer Sensor- und Auswerteeinrichtung, welche die erzeugten Signale aufnimmt und daraus die Aufprall- bzw. Deformationsgeschwindigkeit ermittelt.

12. Kraftfahrzeug nach Anspruch 11, **dadurch gekennzeichnet, dass** eine erste Körperschall-anregende Einheit (1a, 2a,5.1L,5.1R) zur mechanischen Erzeugung eines ersten deterministischen Körperschallsignals ($X_1$(t),F1L,F1R) und eine davon unterschiedliche zweite Körperschall-anregende Einheit (1a,2a,5.1L,5.1R) zur Erzeugung eines zweiten deterministischen Körperschallsignals ($X_2$(t),F2L,F2R) aufweist und die Körperschallschwingungen ($X_1$(t), $X_2$(t),F1L,F2L,F1R,F2R) jeweils von der Deformationsgeschwindigkeit abhängig und zudem voneinander unterscheidbar sind.

13. Kraftfahrzeug nach Anspruch 12, **dadurch gekennzeichnet, dass**

- in einem ersten Bereich (L) des Fahrzeugs eine ersten Körperschallerzeugungsvorrichtung mit zwei Körperschall-anregenden Einheiten (1.1L+5.1L,1.2L+5.2L) zur mechanischen Erzeugung zweier unterscheidbarer deterministischer Körperschallschwingungen vorgesehen ist
- und in einem räumlich davon beabstandeten zweiten Bereich (R) des Fahrzeugs eine zweite Körperschallerzeugungsvorrichtung mit nochmals zwei Körperschall-anregenden Einheiten (1.1R+5.1R,1.2R+5.2R) zur Erzeugung zweier weiterer, voneinander als auch von denen der ersten Körperschallerzeugungsvorrichtung unterscheidbarer deterministischer Körperschallschwingungen vorgesehen ist.

**Claims**

1. A device for generating a solid-borne sound vibration in the event of a collision of a collision object with a vehicle, **characterized in that**
an elastic element (1, 1a, 1 b) that is capable of vibrating mechanically and
a plurality of mechanical excitation elements (2, 2a, 2b) or an excitation profile (5) are arranged relative to each other in such a way
that the excitation elements (2, 2a, 2b) or the excitation profile (5) and the element (1) that is capable of vibrating are mechanically displaced relative to each other due to the collision and the excitation elements (2, 2a, 2b) or the excitation profile (5) each cause an elastic, reversible, mechanical excitation of the element (1) that is capable of vibrating.

2. The device according to claim 1, **characterized in that** the plurality of excitation elements (2, 2a, 2b) or the excitation profile (5) or the element (1) that is capable of vibrating mechanically are mechanically rigidly coupled to an impact absorber (3) on the vehicle in such a way that the impact absorber (3) displaces, by means of said rigid coupling, the excitation elements (2, 2a, 2b) or the excitation profile (5) on the one hand or the element (1) that is capable of vibrating on the other hand relative to each other in the event of a collision with a collision object.

3. The device according to claim 1 or 2, **characterized in that** the element (1) that is capable of vibrating has a self-resonant frequency that is above the frequency of the solid-borne sound vibrations that are caused by the sequence of the excitation elements (2, 2a, 2b) or of the geometry of the excitation profile (5), which frequency of the solid-borne sound vibrations is to be expected in the event of a collision.

4. The device according to any one of the preceding claims, **characterized in that** the excitation elements (2, 2a, 2b) or the element (1) that is capable of vibrating or the excitation profile (5) are formed on the skin of a type damage element of a motor vehicle.

5. The device according to any one of the preceding claims, **characterized in that** the device is connected to the impact absorber (3) and the motion of the impact absorber during the deformation of a pedestrian protection element (4) results in an activation of the solid-borne sound vibrations.

6. The device according to any one of the preceding claims, **characterized in that** the element (1) that is capable of vibrating undergoes a continuous deflection restrictedly guided by the geometry of the excitation profile (5).

7. The device according to claim 6, **characterized in that** the excitation profile has a wave profile.

8. The device according to claim 7, **characterized in that** the wave profile causes, in the direction of motion (X) of the element (1) that is capable of vibrating, deflections (Y) of the element (1) that is capable of vibrating that are perpendicular to the wave profile (5).

9. The device according to claim 8, **characterized in that** the element (1) that is capable of vibrating is guided in a wave profile extending along the and on both sides of the direction of motion.

10. The device according to any one of the preceding claims 7 to 9, **characterized in that** a first wave profile having a linearly rising frequency is provided and a second wave profile having a linearly falling frequency is provided and both wave profiles are captured, in the event of a collision, at the same time by one capable-of-vibrating element each.

11. A motor vehicle with a device according to any one of the preceding claims and with a sensing and analyzing device, which receives the generated signals and determines therefrom the speed of impact or of deformation.

12. The motor vehicle according to claim 11, **characterized in that** it has a first solid-borne-sound-exciting unit (1a, 2a, 5.1 L, 5.1 R) for mechanically generating a first deterministic solid-borne sound signal ($X_1$(t), F1 L, F1 R) and a second solid-borne-sound-exciting unit (1a, 2a, 5.1 L, 5.1 R) for generating a second deterministic solid-borne sound signal ($X_2$(t), F2L, F2R), said second unit being different from said first unit, and the solid-borne sound vibrations ($X_1$(t), $X_2$(t), F1L, F2L, F1R, F2R) each depend on the speed of deformation and are also distinguishable from each other.

13. The motor vehicle according to claim 12, **characterized in that**

- a first solid-borne-sound-generating device with two solid-borne-sound-exciting units (1.1 L+5.1 L, 1.2L+5.2L) for mechanically generating two distinguishable deterministic solid-borne sound vibrations is provided in a first region (L) of the vehicle
- and a second solid-borne-sound-generating device with two further solid-borne-sound-exciting units (1.1 R+5.1 R, 1.2R+5.2R) for generating two further deterministic solid-borne sound vibrations is provided in a second region (R) of the vehicle, said second region being spaced apart from said first region and said two further deterministic solid-borne sound vibrations being distinguishable from each other and from the deterministic solid-borne sound vibrations of the first solid-borne-sound-generating device.

**Revendications**

1. Dispositif pour la production d'une vibration sonore dans la structure en cas d'impact d'un objet de collision avec un véhicule, **caractérisé en ce qu'**un élément (1, 1a, 1 b) élastique pouvant vibrer mécaniquement ainsi qu'une pluralité d'éléments d'excitation (2, 2a, 2b) mécaniques ou un profil d'excitation (5) sont disposés les uns par rapport aux autres de telle façon que, du fait de l'impact, les éléments d'excitation (2, 2a, 2b) ou le profil d'excitation (5) et l'élément (1) pouvant vibrer sont déplacés mécaniquement les uns par rapport aux autres, et les éléments d'excitation (2, 2a, 2b) ou le profil d'excitation (5) provoquent respectivement une excitation élastique, réversible et mécanique de l'élément (1) pouvant vibrer.

2. Dispositif selon la revendication 1, **caractérisé en ce que** la pluralité d'éléments d'excitation (2, 2a, 2b) ou le profil d'excitation (5) ou l'élément (1) pouvant vibrer mécaniquement sont couplés de façon mécaniquement rigide avec un absorbeur de chocs (3) sur le véhicule de telle sorte que, en cas d'impact avec un objet de collision, l'absorbeur de chocs (3) déplace les uns par rapport aux autres, par le biais de cet accouplement rigide, d'une part les éléments d'excitation (2, 2a, 2b) ou respectivement le profil d'excitation (5) et d'autre part l'élément (1) pouvant vibrer.

3. Dispositif selon la revendication 1 ou 2, **caractérisé en ce que** l'élément (1) pouvant vibrer présente une fréquence de résonance propre qui est supérieure à la fréquence, pouvant être attendue en cas de collision, des vibrations sonores dans la structure provoquées par la succession des éléments d'excitation (2, 2a, 2b) ou de la géométrie du profil d'excitation (5).

4. Dispositif selon une des revendications précédentes, **caractérisé en ce que** les éléments d'excitation (2, 2a, 2b) ou l'élément (1) pouvant vibrer ou le profil d'excitation (5) sont constitués en tant que déformation de la peau extérieure d'un élément de dommage type d'un véhicule.

5. Dispositif selon une des revendications précédentes, **caractérisé en ce que** le dispositif est raccordé à l'absorbeur de chocs (3), et **en ce que** le mouvement de l'absorbeur de chocs pendant la déformation d'un élément de protection de piétons (4) provoque une activation des vibrations sonores dans la structure.

6. Dispositif selon une des revendications précédentes, **caractérisé en ce que** l'élément (1) pouvant vibrer subit une déviation continue conduite de façon forcée par la géométrie du profil d'excitation (5).

7. Dispositif selon la revendication 6, **caractérisé en ce que** le profil d'excitation présente un profil d'onde.

8. Dispositif selon la revendication 7, **caractérisé en ce que** le profil d'onde provoque, dans la direction de mouvement (X) de l'élément (1) pouvant vibrer par rapport au profil d'onde (5), des déviations (Y) perpendiculaires de l'élément (1) pouvant vibrer.

9. Dispositif selon la revendication 8, **caractérisé en ce que** l'élément (1) pouvant vibrer est conduit dans un profil d'onde situé des deux côtés le long de la direction de mouvement.

10. Dispositif selon une des revendications précédentes 7 à 9, **caractérisé en ce qu'**il est prévu un premier profil d'onde qui présente une fréquence augmentant de façon linéaire, et **en ce qu'**il est prévu un deuxième profil d'onde qui présente une fréquence diminuant de façon linéaire, et **en ce que**, en cas d'impact, les deux profils d'onde sont repris simultanément par respectivement un élément (1) pouvant vibrer.

11. Véhicule avec un dispositif selon une des revendications précédentes et avec un dispositif de capteur et d'analyse qui enregistre les signaux produits et qui détermine à partir de cela la vitesse d'impact ou respectivement de déformation.

12. Véhicule avec un dispositif selon la revendication 11, **caractérisé en ce qu'**il présente une première unité excitant le bruit de structure (1 a, 2a, 5.1 L, 5.1 R) destinée à la production mécanique d'un premier signal de bruit de structure déterministe ($X_1(t)$, F1 L, F1 R) et une deuxième unité excitant le bruit de structure (1 a, 2a, 5.1 L, 5.1 R) qui diffère de la première et qui est destinée à la production d'un deuxième signal de bruit de structure déterministe ($X_2(t)$, F2L, F2R), et **en ce que** les vibrations sonores dans la structure ($X_1(t)$, $X_2(t)$, F1 L, F2L, F1R, F2R) dépendent respectivement de la vitesse de déformation et peuvent en outre être distinguées les unes des autres.

13. Véhicule selon la revendication 12, **caractérisé en ce que**

- dans une première zone (L) du véhicule, il est prévu un premier dispositif pour la production du bruit de structure avec deux unités excitant le bruit de structure (1.1 L+5.1 L, 1.2L+5.2L) destinées à la production mécanique de deux vibrations sonores dans la structure déterministes pouvant être distinguées
- et dans un deuxième zone (R) du véhicule qui est espacée dans l'espace de la première, il est prévu un deuxième dispositif de production de bruit de structure avec encore deux unités excitant le bruit de structure (1.1 R+5.1 R, 1.2R+5.2R) destinées à la production de deux autres vibrations sonores dans la structure déterministes pouvant être distinguées l'une de l'autre et également de celles du premier dispositif pour la production de bruit de structure.

**Fig. 1**

**Fig. 2**

## Fig. 3

## Fig. 4a

Schnitt A-A'

## Fig. 4b

Schnitt B-B'

## Fig. 4c

## Fig. 4d

Fig. 5a

Fig. 5b

Fig. 6a

Fig. 6b

**A$_x$(t)**

**A$_x$(t)**

**A$_x$(f)**

**A$_x$(f)**

$|\overset{\text{f1}}{\longleftrightarrow}|$

$|\overset{\text{f2}}{\longleftrightarrow}|$

Fig. 6c

Fig. 6d

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004022831 A
- DE 10245780 A1
- WO 2009130097 A